# EUROPEAN PATENT APPLICATION

(11) **EP 2 696 647 A1**
(43) Date of publication of application: **12.02.2014**
(21) Application number: 12767715.1
(22) Date of filing: 05.04.2012
(51) Int. Cl.: H04W 84/22, H04W 4/04, H04W 40/22

(54) **AD-HOC NETWORK, USER NODE, MANAGEMENT SERVER, COMMUNICATION METHOD AND PROGRAM**

(30) Priority: 06.04.2011 JP 2011084510
(71) Applicant: NEC Corporation, Tokyo 108-8001 (JP)
(72) Inventor: FUJIMURA, Atsushi, Tokyo 108-8001 (JP)
(74) Representative: Robson, Aidan John
(86) International application number: PCT/JP2012/059397
(87) International publication number: WO 2012/137882

(57) **Abstract**

Provided is an ad hoc network that can ensure band(s) and redundant path(s) without cost increase. The ad hoc network comprises: a gateway connectable to a predetermined server via an external network; and a plurality of user nodes, constituting an ad hoc network along with the gateway and each transmitting data to the predetermined server via the gateway. Among the user nodes, at least one user node having means for establishing connection to the predetermined server via the external network can participate as a second gateway in the ad hoc network. Based on a predetermined rule, another user node among the plurality of user nodes selects the gateway or the second gateway and transmits data to the predetermined server.

## Description

### [Field]

### (REFERENCE TO RELATED APPLICATION)

This application is based upon and claims the benefit of the priority of Japanese patent application No. 2011-084510 filed on April 06, 2011, the disclosure of which is incorporated herein in its entirety by reference thereto.

The present invention relates to an ad hoc network, a user node, a management server, a communication method, and a program. In particular, it relates to: an ad hoc network including a gateway and a plurality of communication nodes; a user node; a management server; a communication method; and a program.

### [Background]

PTL 1 discloses an ad hoc network including: at least one terminal having a wireless transceiver function of relaying a wireless signal packet transmitted from another terminal; and at least two gateways having a function of communicating with the terminal(s) and a function of establishing connection to a public network.

In addition, PTL 2 discloses an information collection system in which a distance sensor is added to a node included in an ad hoc network as described above. This information collection system collects information about the distance between an aerial line that extends between utility poles and the ground.

For example, the above ad hoc networks in PTL 1 and 2 can be applied to smart meters. For example, smart meters have a function of transmitting data read from electricity, gas, or water meters. Thus, such smart meters are attracting attention as a technique supporting a next-generation power network called a smart grid.

### [Citation List]

### [Patent Literature]

[PTL 1]
   Japanese Patent Kokai Publication No. JP2005-79827A
[PTL 2]
   Japanese Patent Kokai Publication No. JP2006-323440A

### [Summary]

### [Technical Problem]

The disclosure of the above PTL is incorporated herein by reference thereto. The following analysis has been given by the present inventor. As disclosed in PTL 1, in the ad hoc network, since a single gateway accommodates many communication nodes, band(s) around the gateway is(are) narrowed, counted as a problem. In addition, depending on the network topology, if the number of hops is increased, a plurality of paths may not be ensured. Thus, redundant path(s) that can be used in case of failure may not be ensured, counted as a problem. In particular, in a large-scale ad hoc network including smart meters or the like, the network topology is restricted by a large number of nodes accommodated in a single gateway or by a positional relationship among houses. Thus, the above problems are considered to be significant.

PTL 1 aims to solve the above problems, by preparing a plurality of gateways and allowing a terminal to select a gateway. However, if the number of gateways is increased, installation and maintenance costs are increased, counted as a problem.

It is an object of the present invention to provide an ad hoc network, a communication node, a communication method, and a program, which can ensure the band(s) and redundant path(s) as mentioned above without cost increase.

### [Solution to Problem]

According to a first aspect of the present invention, there is provided an ad hoc network, comprising: a gateway connectable to a predetermined server via an external network; and a plurality of user nodes, which constitute an ad hoc network along with the gateway and each of which transmits data to the predetermined server via the gateway. Among the user nodes, at least one user node having means for establishing connection to the predetermined server via the external network can participate (or act) as a second gateway in the ad hoc network. User node(s) that has(have) selected the second gateway in place of the gateway among the plurality of user nodes transmits (or transmit) the data to the predetermined server via the second gateway.

According to a second aspect of the present invention, there is provided a user node, to be connected to an ad hoc network constituted by a gateway connectable to a predetermined server via an external network and by a plurality of user nodes, each of which transmits data to the predetermined server via the gateway. The user node comprises: means for establishing connection to the predetermined server via the external network; and means for advertising that the user node has participated (or acted) as a second gateway in the ad hoc network. The user node transmits data, received from another user node that has selected the user node in place of the gateway, to the predetermined server.

According to a third aspect of the present invention, there is provided a data transmission method, used in an ad hoc network comprising a gateway connectable to a predetermined server via an external network and a plurality of user nodes, which constitute the ad hoc network along with the gateway and each of which transmits data to the predetermined server via the gateway. The data transmission method comprises steps of: among the user nodes, at least one user node having means for establishing connection to the predetermined server via the external network participates (or acts) as a second gateway in the ad hoc network; and causing another user node among the plurality of user nodes to select any one of the gateway and/or the second gateway and to transmit the data to the predetermined server, based on a predetermined rule. This method is associated with certain machines, that is, with the user nodes (communication nodes) included in the ad hoc network.

According to a fourth aspect of the present invention, there is provided a program, used in an ad hoc network comprising a gateway connectable to a predetermined server via an external network and a plurality of user nodes, which constitute the ad hoc network along with the gateway and transmits data to the predetermined server via the gateway. The program causes a computer loaded on at least one of the user nodes to perform processes of: checking a connection environment to the external network in response to a request from a user; determining whether or not the at least one user node can participate (or act) as the second gateway based on a result of the check; and performing, if it is determined that the at least one user node can participate as the second gateway, a gateway advertisement in the ad hoc network. This program can be recorded in a computer-readable (non-transient) storage medium. Namely, the present invention can be embodied as a computer program product.

### [Advantageous Effects of Invention]

According to the present invention, bandwidths and redundant paths in an ad hoc network can be ensured without cost increase.

### [Brief Description of Drawings]

[Fig. 1]

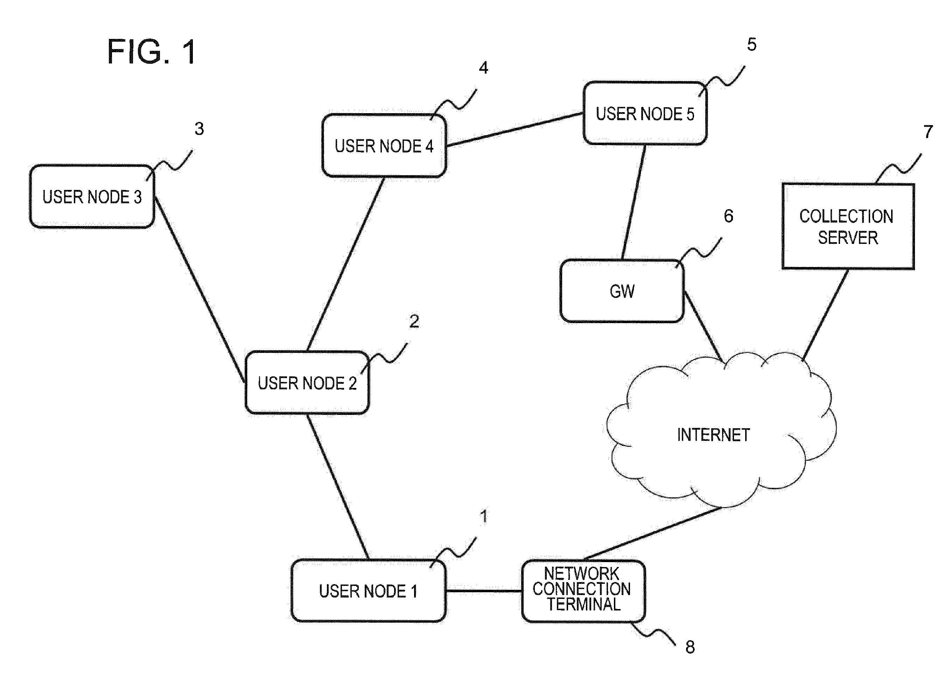

   Fig. 1 illustrates an outline of an exemplary embodiment of the present invention.
[Fig. 2]

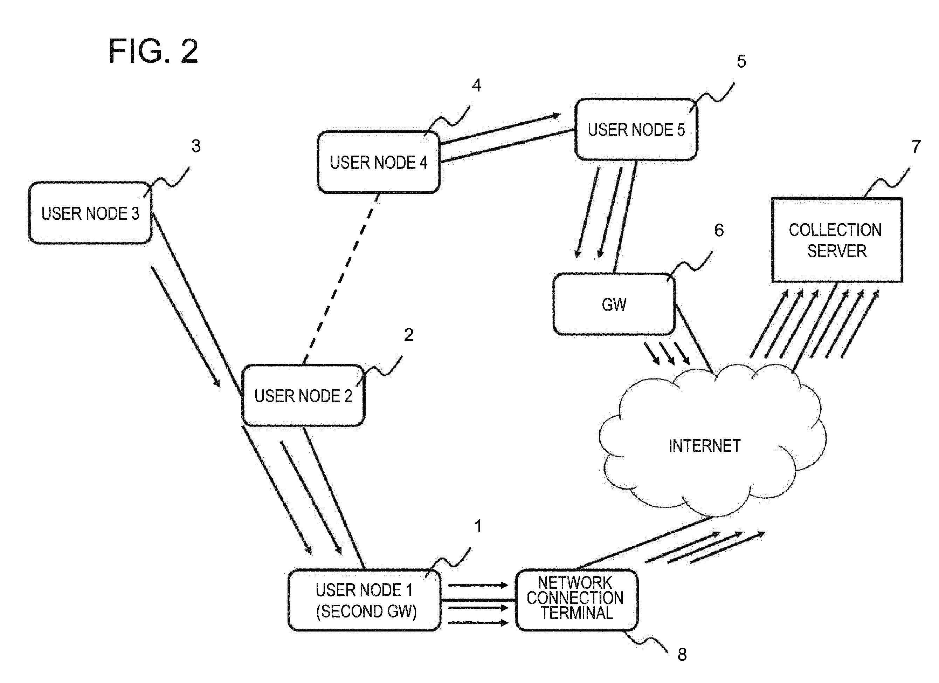

   Fig. 2 is a diagram that follows Fig. 1.
[Fig. 3]

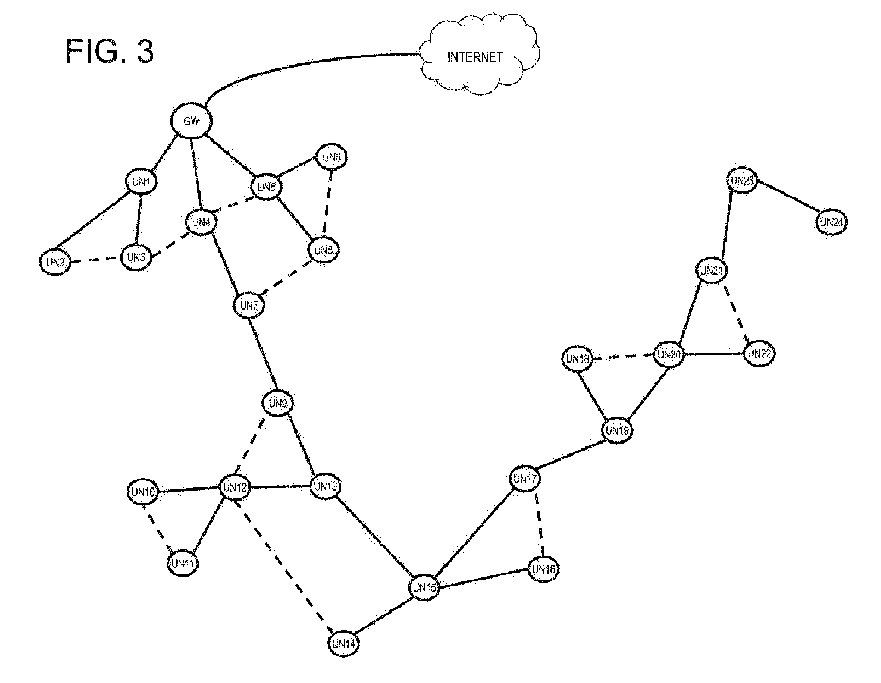

   Fig. 3 illustrates a configuration of an ad hoc network according to a first exemplary embodiment of the present invention.
[Fig. 4]

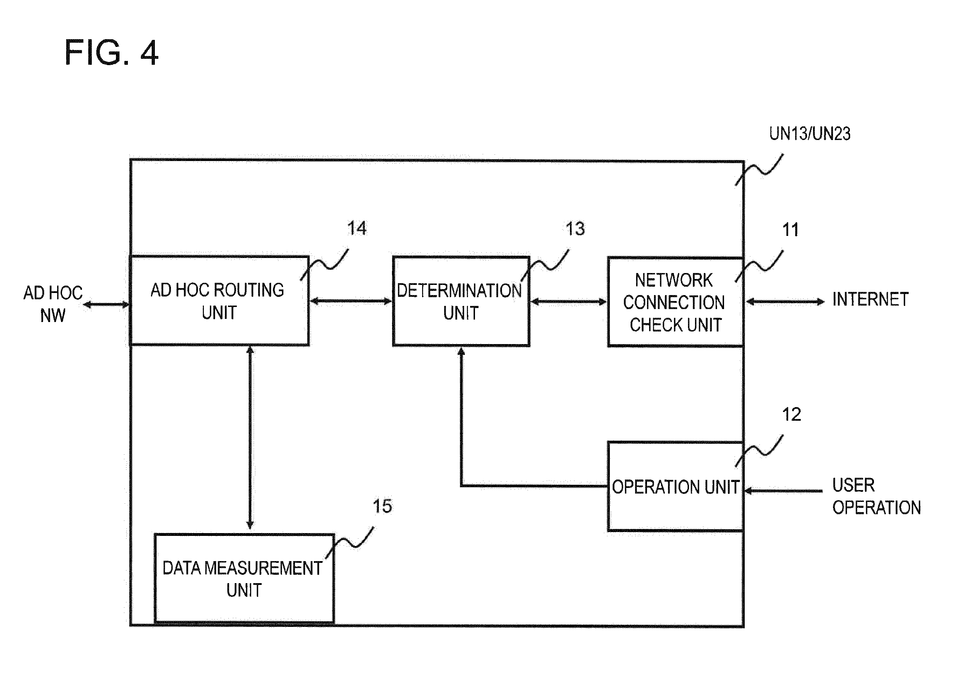

   Fig. 4 is a block diagram illustrating a configuration of a user node according to the first exemplary embodiment of the present invention.
[Fig. 5]

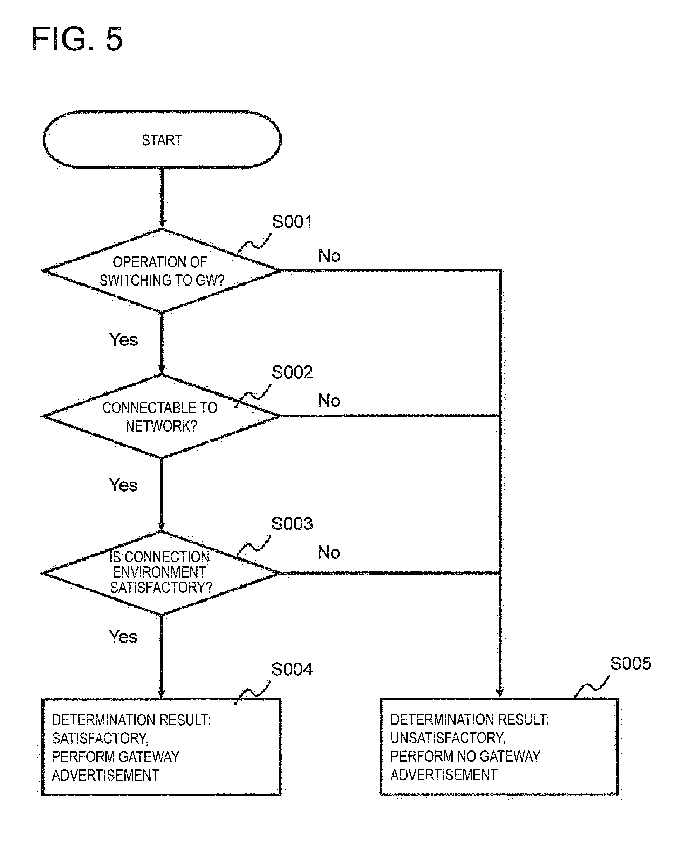

   Fig. 5 is a flowchart illustrating an operation of a user node according to the first exemplary embodiment of the present invention.
[Fig. 6]

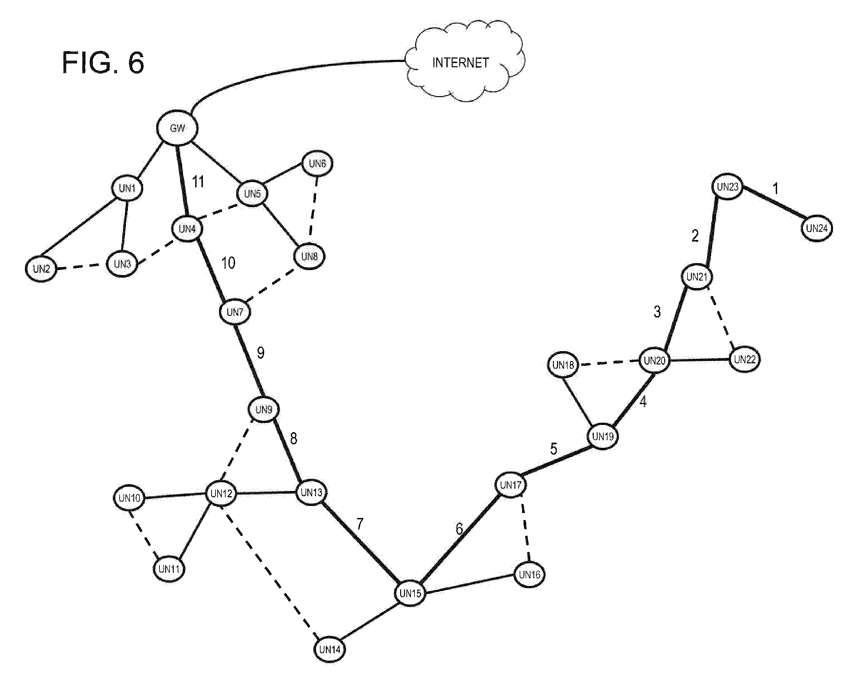

   Fig. 6 illustrates a shortest path from a user node UN24 to a GW in Fig. 3.
[Fig. 7]

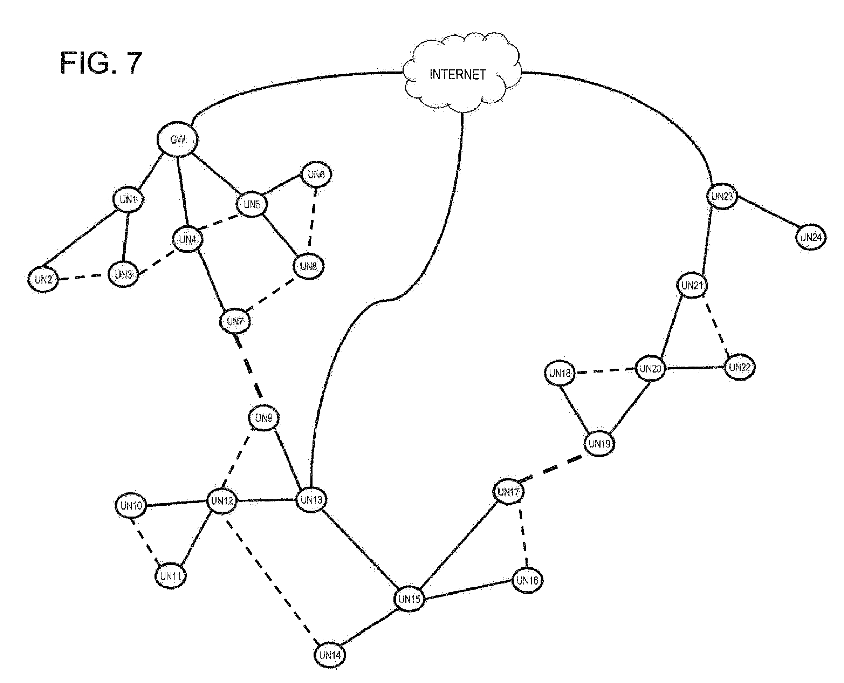

   Fig. 7 illustrates a network configuration after user nodes UN13 and UN23 in Fig. 3 are switched to GWs.
[Fig. 8]

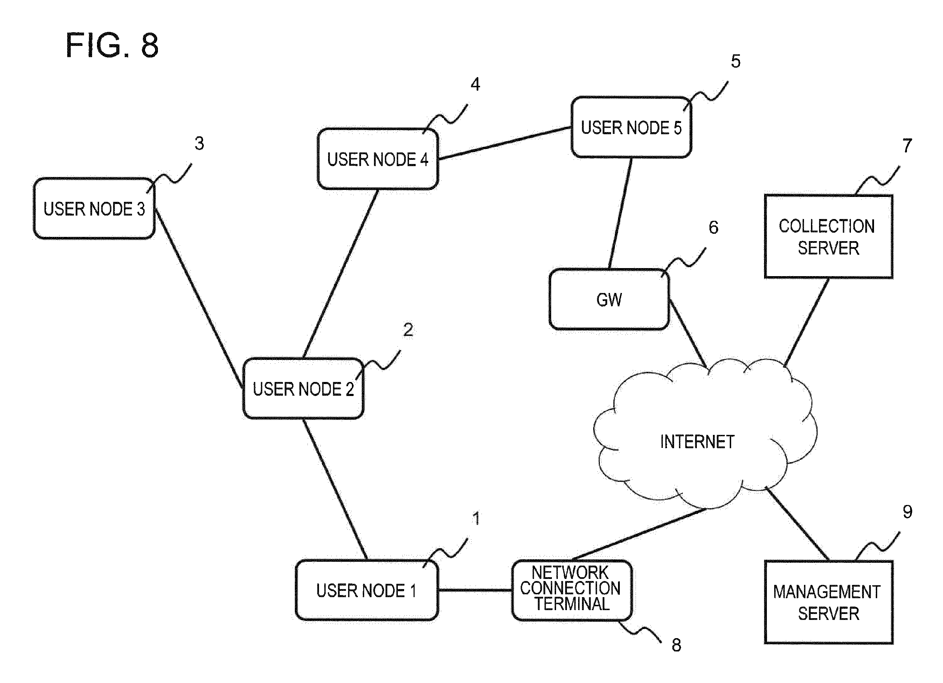

   Fig. 8 illustrates a configuration of an ad hoc network according to a second exemplary embodiment of the present invention.
[Fig. 9]

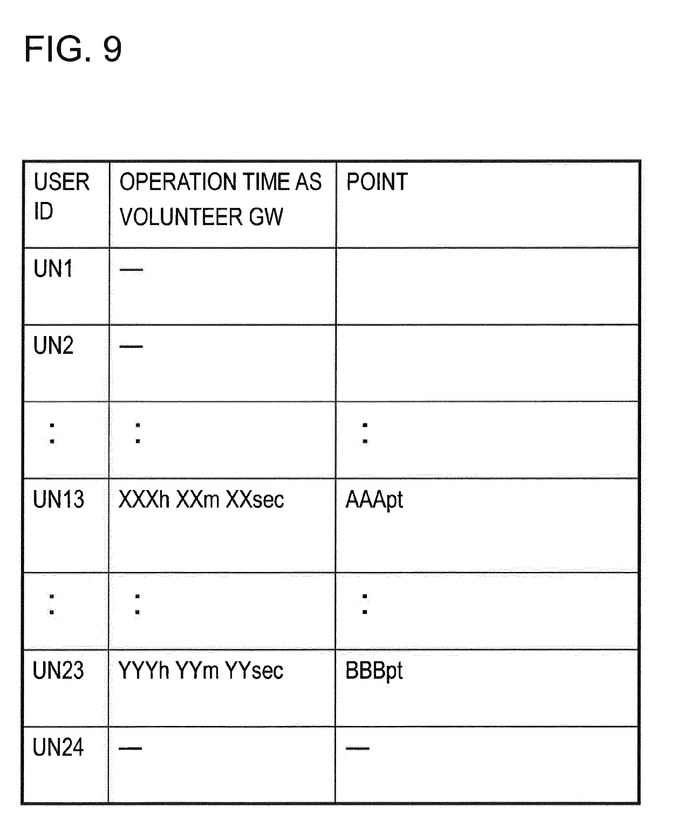

   Fig. 9 illustrates a table managed by a management server according to the second exemplary embodiment of the present invention.

### [Description of Embodiments]

First, an outline of an exemplary embodiment of the present invention will be described with reference to the drawings. In the following outline, various components are denoted by reference characters for the sake of convenience. Namely, the following reference characters are merely used as examples to facilitate understanding of the present invention. Thus, the present invention is not limited to the illustrated modes.

In an exemplary embodiment of the present invention, as illustrated in Fig. 1, an ad hoc network can be realized by a configuration including: a gateway (a GW 6 in Fig. 1) connectable to a predetermined server (a collection server 7 in Fig. 1) via an external network (the Internet in Fig. 1); and a plurality of user nodes (user nodes 1 to 5 in Fig. 1), each of which transmits data to the predetermined server via the gateway.

Among the user nodes, a user node (the user node 1 in Fig. 1) includes means (for example, an internet connection function via a network connection terminal 8 in Fig. 1 or a broadband router) for establishing connection to the predetermined server via the external network.

Based on a user's intention, this user node (the user node 1 in Fig. 1) performs a gateway advertisement and notifies the other user nodes in the ad hoc network of its own presence as a second gateway. When notified, other user nodes belonging to the ad hoc network again selects a gateway, in accordance with a corresponding predetermined gateway selection rule.

As a result, as illustrated in Fig. 2, user nodes (the user nodes 2 and 3 in Fig. 2), which have selected the second gateway (the user node 1 in Fig. 1) in place of the gateway, transmit the data via the second gateway (the user node 1 in Fig. 1).

As described above, according to the present invention, a second gateway can be configured by using a user node (the user node 1 in Fig. 1) prepared by a user and network connection means (a network connection terminal 8 or a broadband router), without adding a new gateway. Consequently, the number of nodes that are accommodated (allocated) in a gateway (the GW 6 in Fig. 1) can be reduced. In addition, as illustrated in Fig. 2, since a total of two gateways are deemed to have been installed, band(s) and redundant path(s) can be ensured.

### [First exemplary embodiment]

Next, a first exemplary embodiment of the present invention will be described in detail with reference to the drawings. Fig. 3 illustrates a configuration of an ad hoc network according to a first exemplary embodiment of the present invention. Fig. 3 illustrates an ad hoc network including user nodes UN1 to UN24 and a gateway GW. In Fig. 3, each solid line represents a path that is set from a user node toward the gateway and each dashed line represents an alternative path (by-pass route or redundant path).

Each of the user nodes UN1 to UN24 is a communication node that a general customer user (which will hereinafter be referred to as "a user") purchases or lends from a business operator or the like. Each of the user nodes UN1 to UN24 includes a wireless communication function. By performing multi-hop forwarding from user node to user node, each user node transmits data to the gateway GW. Each of such user nodes may be a dedicated product including a measuring instrument called a smart meter or may be a mobile wireless router capable of exchanging data with an existing meter.

Fig. 4 is a block diagram illustrating a configuration of a user node that can participate (act) as a gateway among the user nodes UN1 to UN24 (the following description will be made assuming that the user nodes UN13 and UN23 can act as gateways). Fig. 4 illustrates a configuration including a network connection check unit 11, an operation unit 12, a determination unit 13, an ad hoc routing unit 14, and a data measurement unit 15.

The network connection check unit 11 checks an Internet connection environment of own user node in response to a request from the determination unit 13 and transmits a reply to the determination unit 13. For example, the Internet connection environment signifies information about an Internet connection status (a connection mode/a line type) and information about reliability of Internet connection. When transmitting a reply, the network connection check unit 11 may transmit a check result, such as by transmitting a test packet or the like. In a simple way, the network connection check unit 11 may read a setting file or the like relating to Internet connection of a home broadband router or a personal computer connected thereto and may transmit the setting file or the like as a replay.

For example, the operation unit 12 includes a button for receiving a user's intention that the user wishes to participate as a second gateway (hereinafter, such node will be referred to as "a volunteer GW," since the user voluntarily provides the Internet connection environment of the node).

When the determination unit 13 is notified by the operation unit 12 that the user wishes to participate as a volunteer GW, the determination unit 13 causes the network connection check unit 11 to make a query about the Internet connection environment of the user node. When receiving a result of the query, the determination unit 13 determines whether or not the user node can participate as a volunteer GW based on the result of the query and notifies the ad-hoc routing unit 14 of a result of the determination. For example, if the Internet connection environment transmitted from the network connection check unit 11 indicates a line capability insufficient to operate as a volunteer GW or a security problem, the participation (acting) as a volunteer GW is rejected.

If the determination unit 13 allows participation of the user node as a volunteer GW, the ad-hoc routing unit 14 performs a gateway advertisement to notify the ad hoc network of presence of user's own user node (as a volunteer GW). This gateway advertisement includes wireless link cost information or the like. If the determination unit 13 determines that the user node cannot be used as a volunteer GW or if there is no user's intention of using the user node as a volunteer GW, the ad-hoc routing unit 14 forwards data measured by the data measurement unit 15 as a communication node on the ad hoc network.

If the ad-hoc routing unit 14 receives a gateway advertisement from a volunteer GW on the ad hoc network, the ad-hoc routing unit 14 selects a low-cost gateway from the gateways GWs including this volunteer GW. Other than such cost-based method, a gateway can be selected by using a band information notification message disclosed in PTL 1, for example.

The data measurement unit 15 is means for measuring data of measuring instrument(s) and outputting the measured meter data to the ad-hoc routing unit 14. The data measurement unit 15 does not necessarily measure meter data. For example, data about electricity, water, or gas usage measured by another measuring instrument(s) can be included.

The present exemplary embodiment will be described assuming that the user nodes UN13 and UN23 include the above configuration and the other user nodes include only the ad-hoc routing unit 14 and the data measurement unit 15. Of course, all the nodes may include the above configuration. In such case, all users can be given opportunity to switch the respective nodes to volunteer GWs.

The network connection check unit 11 and the determination unit 13 in the user node illustrated in Fig. 4 can be realized by a computer program causing a computer mounted on the user node to use its hardware and to perform processing corresponding to the above network connection check unit 11 and determination unit 13.

Next, an operation of the present exemplary embodiment will be described in detail with reference to the drawings. Fig. 5 is a flowchart illustrating an operation of a user node according to the present exemplary embodiment.

In Fig. 5, first, if it is determined that a user has indicated his/her intention to participate as a volunteer GW (an operation of switching a user node to a GW) (Yes in step S001), the determination unit 13 queries the network connection check unit 11 about whether this user node has an Internet connection environment (step S002).

If, as a result of the query, the determination unit 13 receives a reply that the user node has an Internet connection environment (Yes in step S002), the determination unit 13 determines whether the Internet connection environment satisfies a predetermined criterion (step S003).

If, as a result of the determination, the determination unit 13 determines that the Internet connection environment of the user node satisfies a predetermined criterion (Yes in step S003), the determination unit 13 notifies the ad-hoc routing unit 14 to that effect. When notified, the ad-hoc routing unit 14 performs a gateway advertisement in the ad hoc network (step S004).

If the determination unit 13 determines "No" in any of the above steps S001 to S003, no gateway advertisement is performed.

Fig. 6 illustrates a configuration of an ad hoc network before the user nodes UN13 and UN23 are switched to volunteer GWs. In Fig. 6, the gateway GW accommodates 24 user nodes of the user nodes UN1 to UN24. The number of hops of the shortest path from the user node UN24 to the gateway GW amounts to 11. In addition, only one path exists between the user nodes UN7 and UN9 and between the user nodes UN17 and UN19. Namely, there is no alternative path (by-pass or redundant path) for the user nodes UN9 and UN19.

Fig. 7 illustrates a configuration of the ad hoc network after the flow illustrated in Fig. 5 is performed and the user nodes UN13 and UN23 are switched to act as volunteer GWs. In Fig. 7, the number of user nodes accommodated by each of the gateways, including the volunteer GWs, is leveled to 8. In addition, the number of hops of the shortest path from the user node UN24 to the user node UN23, which is the volunteer GW closest to the user node UN24, is 1. In addition, an alternative path (redundant path) has been provided between the user nodes UN9 and UN 19.

Thus, according to the present exemplary embodiment, without making additional infrastructure investments, the number of user nodes that can be accommodated by (allocated to) each gateway can be reduced, and the use efficiency of the ad hoc network can be improved.

In addition, according to the present exemplary embodiment, since the number of hops from a user node to a gateway can be reduced, the possibility of failure in data transmission/reception can be reduced.

In addition, according to the present exemplary embodiment, since the number of choices for a path from a user node to the Internet is increased, even if failure is caused, connection to the Internet can be ensured. For example, even if a failure is caused in the gateway GW in Fig. 7, by using an alternative path (by-pass route) between the user nodes UN7 and UN9, the user nodes UN1 to UN7 can transmit data via the user node UN13.

### [Second exemplary embodiment]

Next, a second exemplary embodiment of the present invention will be described in detail with reference to the drawings. In the second exemplary embodiment, an incentive is provided for taking participation as a volunteer GW as described above.

Fig. 8 illustrates a configuration of an ad hoc network according to the second exemplary embodiment of the present invention. This configuration in Fig. 8 differs from that illustrated in Fig. 1 in that a management server 9 is arranged on the Internet. Since other basic components are the same as those that are illustrated in Fig. 1 and that are described in the first exemplary embodiment, the following description will be made with a focus on differences.

The management server 9 in Fig. 8 is a server that monitors each of the user nodes and checks those used as volunteer GWs. In addition, based on a band or time provided by a user node as a volunteer GW, the management server 9 provides the user with points (incentive points) and manages these points.

Fig. 9 illustrates a table managed by the management server 9 according to the present exemplary embodiment. As illustrated in Fig. 9, the user nodes UN13 and UN23 have participated (acted) as volunteer GWs for certain time periods, respectively. Thus, these nodes have been provided with points according to the respective time periods. In contrast, the other user nodes have not acted as volunteer GWs. Thus, these nodes have not been provided with points.

By providing a discount corresponding to the points, for example, on electricity, gas, or water charges determined based on measured data collected by each of user nodes, it is possible to give an incentive to participate as volunteer GWs. Of course, other than such discount on the electricity, gas, water charges, the points may be exchanged with goods or with points in another point system.

In Fig. 9, points are given according to the time periods for which the nodes have participated as volunteer GWs. However, for example, points may be given and managed according to the amount of traffic that each volunteer GW has forwarded or the number of nodes each volunteer GW has accommodated (allocated) or according to a combination of the amount and the number.

According to the second exemplary embodiment of the present invention, since an increase in the number of user nodes that participate as volunteer GWs is expected, the band(s) can be used more efficiently than those in the above first exemplary embodiment. In addition, users can acquire rewards by using resources (network connection environments) in an idle condition.

While preferred exemplary embodiments of the present invention have thus been described, the present invention is not limited thereto. Further variations, substitutions, or adjustments can be made without departing from the basic technical concept of the present invention. For example, the user node numbers and the topology configurations used in the above exemplary embodiments are examples to facilitate understanding of the present invention. Various changes may be made to these numbers and configurations. In particular, the components and parts described in each aspect, each exemplary embodiment, each example, and each drawing can be selected, combined, or changed, without departing from the basic technical concept of the present invention.

In addition, each of the above exemplary embodiments has been described assuming that each user node is connected to the Internet via a network connection terminal 8, a broadband router, or the like. However, alternatively, each user node may be connected to the network via another device or may include a network connection function.

### [Reference Signs List]

- 1 to 5: user node
- 6: gateway (GW)
- 7: collection server
- 8: network connection terminal
- 9: management server
- 11: network connection check unit
- 12: operation unit
- 13: determination unit
- 14: ad hoc routing unit
- 15: data measurement unit
- UN1 to UN24: user node
- GW: gateway

## Claims

1. An ad hoc network, comprising:
a gateway connectable to a predetermined server via an external network; and
a plurality of user nodes which constitute an ad hoc network along with the gateway and each of which transmits data to the predetermined server via the gateway;
wherein, among the user nodes, at least one user node having means for establishing connection to the predetermined server via the external network can participate (act) as a second gateway in the ad hoc network; and
wherein, based on a predetermined rule, the plurality of user nodes select any one of the gateway and/or the second gateway and transmit the data to the predetermined server.

2. The ad hoc network according to claim 1;
wherein, if a connection environment to the external network of the at least one user node having the means for establishing connection to the predetermined server satisfies a predetermined criterion, the at least one user node participate as the second gateway in the ad hoc network.

3. The ad hoc network according to claim 1 or 2;
wherein the at least one user node having the means for establishing connection to the predetermined server comprises:
a connection check unit checking a connection environment to the external network of the at least one user node;
a determination unit determining, when an operation for participation of the at least one user node as the second gateway in the ad hoc network is performed, whether or not the at least one user node can participate (act) as the second gateway, based on a result received from the connection check unit; and
an ad hoc routing unit performing, if the determination unit determines that the at least one user node can participate as the second gateway, a gateway advertisement in the ad hoc network.

4. The ad hoc network according to any one of claims 1 to 3;
wherein data transmitted from the plurality of user nodes to the predetermined server is data measured by a predetermined measuring instrument.

5. The ad hoc network according to any one of claims 1 to 4, further comprising:
a management server managing incentive points, based on at least one of a time period for which the at least one user node having the means for establishing connection to the predetermined server has participated (acted) as the second gateway, a traffic amount forwarded by the at least one user node as the second gateway, and the number of nodes accommodated by the at least one user node.

6. A user node, to be connected to an ad hoc network constituted by a gateway connectable to a predetermined server via an external network and by a plurality of user nodes, each of which transmits data to the predetermined server via the gateway, the user node comprising:
means for establishing connection to the predetermined server via the external network; and
means for advertising that the user node has participated (acted) as a second gateway in the ad hoc network;
wherein the user node transmits data, received from another user node that has selected the user node in place of the gateway, to the predetermined server.

7. The user node according to claim 6, further comprising:
a connection check unit checking a connection environment to the external network;
a determination unit determining, when an operation for participation of the user node as the second gateway in the ad hoc network is performed, whether or not the user node can participate as the second gateway based on a result received from the connection check unit; and
an ad hoc routing unit performing, if the determination unit determines that the user node can participate as the second gateway, a gateway advertisement in the ad hoc network.

8. A management server, managing incentive points, based on at least one of a time period for which the user node according to claim 6 or 7 has participated as the second gateway, a traffic amount forwarded by the user node as the second gateway, and the number of nodes accommodated by the user node as the second gateway.

9. A data transmission method, comprising steps of:
among the user nodes, comprised in an ad hoc network, at least one user node participating in the ad hoc network, the at least one user node having means for establishing connection to the predetermined server via the external network as a second gateway in the ad hoc network; and
causing another user node among the plurality of user nodes to select any one of the gateway and the second gateway and to transmit the data to the predetermined server, based on a predetermined rule;
wherein the ad hoc net work comprises a gateway connectable to a predetermined server via an external network and a plurality of user nodes, which constitute the ad hoc network along with the gateway and each of which transmits data to the predetermined server via the gateway.

10. A program, used in an ad hoc network comprising a gateway connectable to a predetermined server via an external network and a plurality of user nodes, which constitute the ad hoc network along with the gateway and each of which transmits data to the predetermined server via the gateway,
the program causing a computer loaded on at least one of the user nodes to perform processes of:
checking a connection environment to the external network in response to a request from a user;
determining whether or not at least one user node can participate (act) as the second gateway based on a result of the check; and
performing, if it is determined that the at least one user node can participate as the second gateway, a gateway advertisement in the ad hoc network.
